(19) Europäisches Patentamt
European Patent Office
Office européen des brevets

(11) Veröffentlichungsnummer: **0 212 627**
**B1**

# (12) EUROPÄISCHE PATENTSCHRIFT

(45) Veröffentlichungstag der Patentschrift: **31.05.89**

(51) Int. Cl.⁴: **C 09 B 62/515**

(21) Anmeldenummer: **86111490.8**

(22) Anmeldetag: **19.08.86**

(54) **Verfahren zur Herstellung von Kupferkomplex-Disazoverbindungen.**

(30) Priorität: **28.08.85 US 770341**

(43) Veröffentlichungstag der Anmeldung:
**04.03.87 Patentblatt 87/10**

(45) Bekanntmachung des Hinweises auf die Patenterteilung:
**31.05.89 Patentblatt 89/22**

(84) Benannte Vertragsstaaten:
**BE CH DE FR GB IT LI**

(56) Entgegenhaltungen:
**EP-A-0 044 936**
**CH-A-478 899**
**FR-A-2 360 539**
**GB-A-1 156 514**
**US-A-3 364 194**

(73) Patentinhaber: **HOECHST CELANESE CORPORATION, Route 202- 206 North, Somerville, N.J. 08876 (US)**

(72) Erfinder: **Corso, Anthony J., Dr., 5 Crocus Court, Coventry, RI 02816 (US)**
Erfinder: **Meininger, Fritz, Dr., Loreleistrasse 7, D-6230 Frankfurt am Main 80 (DE)**
Erfinder: **Steuernagel, Hans Helmut, Dr., An den Römergärten 1, D-6233 Kelkheim (Taunus) (DE)**

(74) Vertreter: **Meier, Karl, Dr., Hoechst AG Zentrale Patentabteilung Postfach 80 03 20, D-6230 Frankfurt am Main 80 (DE)**

**EP 0 212 627 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung liegt auf dem Gebiet der Herstellung von Kupferkomplex-Disazofarbstoffen. Sie betrifft ein verbessertes Verfahren zur Herstellung eines bekannten Farbstoffes.

In der US-Patentschrift 3 364 194 ist im Beispiel 12 der 1 : 1-Kupferkomplex-Disazofarbstoff der metallfreien Disazoverbindung der nachstehenden Formel (in Form der freien Säure geschrieben)

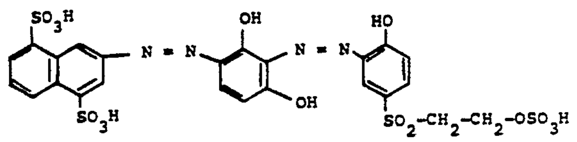

beschrieben; er wird dort gemäß einer zweistufigen Kupplungsreaktion mit nachfolgender Kupferung hergestellt. Zunächst wird 2-Naphthylamin-4,8-disulfonsäure nach Diazotierung in wäßrig saurer Lösung mit Resorcin zur Monoazoverbindung gekuppelt; die Monoazoverbindung wird ausgesalzen und durch Filtration isoliert und sodann in Form des feuchten Filterkuchens in eine wäßrige neutrale Lösung des Diazoniumsalzes des 2-Amino-4-(β-sulfatoäthylsulfonyl)-phenols gegeben, wobei die zweite Kupplungsreaktion bei einem pH-Wert zwischen 6,5 und 7,5 erfolgt. Der so erhaltene metallfreie Disazofarbstoff wird mit Kupfersulfat versetzt und bei einem pH-Wert zwischen 5 und 6 in dessen Kupferkomplex-Verbindung übergeführt.

Das als zweite Diazokomponente im Beispiel 12 dieser US-PS-3 364 194 verwendete 2-Amino-4-(β-sulfatoäthylsulfonyl)phenol wird durch Veresterung von 2-Amino-4-(β-hydroxyäthylsulfonyl)-phenol in einer überschüssigen Menge an konzentrierter Schwefelsäure und anschließende Diazotierung in wäßrigem Medium hergestellt. Die Diazoniumsalzlösung wird sodann mit Natriumbicarbonat auf einen pH-Wert zwischen 6,5 und 6,8 eingestellt.

In ähnlicher Weise wird dieser Disazofarbstoff gemäß Beispiel 17 der US-Patentschrift 4 334 076 synthetisiert, wobei man von 2-Amino-4-(β-sulfatoäthglsulfonyl)-phenol ausgeht, das durch Veresterung von 2-Amino-4-(β-hydroxyäthylsulfonyl)-phenol mit nahezu äquivalenten Mengen an einem Sulfatierungsmittel, wie konzentrierter Schwefelsäure oder Schwefeltrioxid enthaltender Schwefelsäure, in einer mit Knetwirkung arbeitenden Maschine hergestellt wird.

Diese bekannten Verfahren haben mehrere Nachteile:

a) Die als Ausgangsverbindung bzw. Zwischenverbindung dienende Monoazoverbindung der Formel (in Form der freien Säure geschrieben)

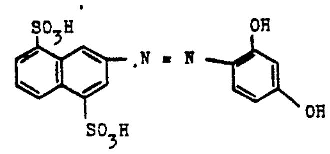

kuppelt mit der Diazoniumverbindung des 2-Amino-4-(β-sulfatoäthylsulfonyl)-phenols nur sehr langsam (und vollständig erst nach einer Reaktionszeit von etwa 24 Stunden);

b) die Synthese des 2-Amino-4-(β-sulfatoäthylsulfonyl)-phenols erfordert mehrere Reaktionsstufen mit hohem apparativem Aufwand. Man muß zu deren Herstellung zunächst von 2-Nitro-4-(β-hydroxyäthylsulfonyl)-anisol ausgehen, das durch Erhitzen mit wäßriger Natronlauge zum 2-Nitro-4-(β-hydroxyäthylsulfonyl)-phenol entalkyliert wird, welches sodann zum 2-Amino-4-(β-hydroxy-äthylsulfonyl)-phenol reduziert und dieses wiederum gemäß den Angaben der obengenannten US-Patentschrift 3 364 194 oder 4 334 076 sulfatisiert werden muß.

Weiterhin ist in der US-Patentschrift 3 457 251 die Herstellung von Kupfer-, Kobalt- und Chromkomplex-Disazofarbstoffen beschrieben. Gemäß Beispiel 1 dieser Patentschrift wird die Ausgangs-Monoazoverbindung aus 3-Amino-5-hydroxy-naphthalin-7-sulfonsäure und 1-Amino-8-naphthol-2,4-disulfonsäure mit dem Diazoniumsalz des 2-Amino-1-methoxy-4-(β-sulfatoäthylsulfonyl)-benzols gekuppelt und der hierbei entstandene Disazofarbstoff unter Desmethylierung der Methoxygruppe in Gegenwart der 1,73-fach molaren Menge an Kupfersulfat bei Siedetemperatur und einer Reaktionszeit von 15 Stunden in die Kupferkomplex-Verbindung übergeführt. Jedoch werden in dieser Druckschrift keine Disazofarbstoffe mit dem Resorcin als Kupplungskomponente beschrieben.

Mit der vorliegenden Erfindung wurde nunmehr gefunden, daß man 1 : 1-Kupferkomplex-Disazoverbindungen von metallfreien Disazoverbindungen der allgemeinen Formel (1)

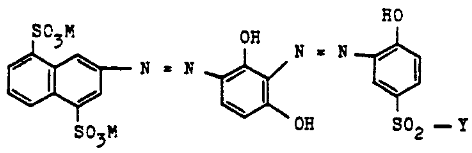

(1)

in welcher das Kupferatom mit einer der beiden Hydroxygruppen der Resorcin-Komponente und mit der Hydroxygruppe der aus Formel (1) ersichtlichen Diazokomponente komplex gebunden ist und in welcher M ein Wasserstoffatom oder das Äquivalent eines ein- oder zweiwertigen Metalls, insbesondere eines Alkali oder Erdalkalimetalls, wie beispielsweise des Natriums, Kaliums, Lithiums und Calciums und insbesondere des Natriums und Lithiums, bedeutet und Y die Vinylgruppe oder eine Äthylgruppe, die in β-Stellung einen als Anion alkalisch eliminierbaren Rest enthält, darstellt und bevorzugt eine β-Sulfatoäthyl-Gruppe ist, unter wesentlich leichteren und weniger aufwendigen Bedingungen herstellen kann, wenn man eine Monoazoverbindung der allgemeinen Formel (3)

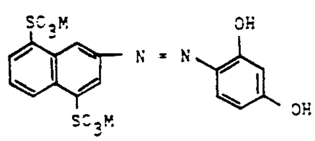

(3)

in welcher M die obengenannte Bedeutung besitzt, mit einer Diazoniumverbindung einer Aminoverbindung der allgemeinen Formel (4)

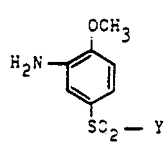

(4)

in welcher Y die obengenannte Bedeutung besitzt, kuppelt und die erhaltene Disazovebindung der allgemeinen Formel (2)

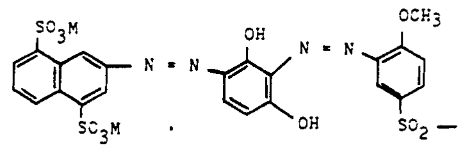

(2)

in welcher M und Y die obengenannten Bedeutungen haben, bevorzugt ohne deren Zwischenisolierung, bei einer Temperatur zwischen 70 und 130°C und einem pH-Wert zwischen 3 und 6 mit einem kupferabgebenden Mittel behandelt.

Die Diazoniumverbindung des Amins der allgemeinen Formel (4) hat gegenüber der Aminophenolverbindung des Standes der Technik den erheblichen Vorteil, daß die Kupplung mit der Azoverbindung der allgemeinen Formel (3) sehr schnell vonstatten geht und nach etwa einer Stunde beendet ist, so daß anschließend sofort die Überführung der metallfreien Disazoverbindung der allgemeinen Formel (2) in deren 1 : 1-Kupferkomplex-Disazoverbindung durch entalkylierende Kupferung in erfindungsgemäßer Weise erfolgen kann. Ein weiterer Vorteil des erfindungsgemäßen Verfahrens ist, daß die Überführung der metallfreien Disazoverbindung der allgemeinen Formel (2) durch desalkylierende Kupferung in deren 1 : 1-Kupferkomplex-Disazoverbindung überraschenderweise ebenfalls schneller abläuft als die desalkylierende Kupferungsreaktion der metallfreien Disazoverbindung des Beispieles 1 der US-Patentschrift 3 457 251 in deren 1 : 1-Kupferkomplex-Disazoverbindung.

Zudem ist die 2-Amino-methoxybenzol-Verbindung der allgemeinen Formel (4) wesentlich leichter zugänglich als das in der bekannten Verfahrensweise als Diazokomponente verwendete 2-Amino-4-(β-sulfatoäthylsulfonyl)-phenol. Denn die erfindungsgemäß verwendete Diazokomponente der allgemeinen Formel (4) ist leicht über eine Zweistufenreaktion erhältlich: In gleicher Weise wie bei der Herstellung des Aminophenols des Standes der Technik, ausgehend von 2-Nitro-4-(β-hydroxyäthylsulfonyl)-methoxybenzol, wird diese Nitroverbindung zunächst reduziert und sodann durch ein Sulfatierungsmittel in die Sulfatoverbindung übergeführt. Die so erhältliche erfindungsgemäß verwendete Diazokomponente der allgemeinen Formel (4) mit Y gleich der β-Sulfatoäthyl-Gruppe kann sodann sofort in die Diazotierung und Kupplung mit der Monoazoverbindung der allgemeinen Formel (3) eingesetzt werden.

Der erfindungsgemäße Verfahrensschritt der Umsetzung der Diazokomponente der allgemeinen Formel (4) mit der kupplungsfähigen

Monoazoverbindung der allgemeinen Formel (3) erfolgt vorzugsweise in rein wäßrigem Medium. Die Diazotierung des Amins der allgemeinen Formel (4) geschieht in üblicher Weise, vorzugsweise mittels Natriumnitrit in saurer, wäßriger Lösung. Die Kupplungsreaktion kann bei einer Temperatur zwischen 0 und 25° C und bei einem pH-Wert zwischen 2,5 und 7, vorzugsweise zwischen 3 und 5, durchgeführt werden.

Die erfindungsgemäße Kupferungsreaktion wird bevorzugt in rein wäßrigem Medium durchgeführt. Geringe Mengen an einem organischen, mit Wasser mischbaren Lösungsmittel, das gegenüber den Reaktionsbedingungen inert ist, wie beispielsweise ein niedermolekularer Alkohol, kann zugegen sein. Bei Durchführung der Reaktion oberhalb von 100° C arbeitet man in geschlossenen Apparaturen unter Druck. Vorteilhaft wird jedoch die Umsetzung bei einer Temperatur zwischen 80 und 100° C durchgeführt. Ebenso arbeitet man bevorzugt in einem pH-Bereich zwischen 3,5 und 5,0, wobei der pH-Wert durch Zusatz von entsprechenden Puffersubstanzen, wie einem Alkaliacetat, bevorzugt Natrium- und insbesondere Lithiumacetat, gehalten werden kann.

Als kupferabgebende Mittel kommen dabei anorganische und organische Kupferverbindungen in Betracht, vorzugsweise Kupfersalze, wie Kupfersulfat, Kupferacetat, Kupferchlorid und basisches Kupfercarbonat. Die erfindungsgemäße entalkylierende Kupferungsreaktion kann unter Verwendung von äquimolaren Mengen der Kupferverbindung, bezogen auf die Ausgangs-Disazoverbindung der allgemeinen Formel (2), mit Erfolg durchgeführt werden, wobei andererseits ein Überschuß an kupferabgebendem Mittel eine Verkürzung der Reaktionszeit bewirkt. Nach beendeter Kupferungsreaktion kann überschüssiges Kupfer beispielsweise durch Zugabe von Oxalsäure als Oxalat gefällt und somit dem Abwasser entzogen werden; nach Abfiltration kann es wieder aufgearbeitet und zurückgewonnen werden.

Insgesamt ist es vorteilhaft, gemäß dem erfindungsgemäßen Verfahren die Farbstoffe der allgemeinen Formel (1) als Lithiumsalze zu erhalten und in entsprechender Weise bereits von Ausgangsverbindungen auszugehen, die ganz oder teilweise als Lithiumsalze vorliegen. Die Lithiumsalze gewährleisten, insbesondere für das Kupferkomplex-Endprodukt, eine besonders gute Wasserlöslichkeit, was sich vorteilhaft bei der Weiterverwendung der erfindungsgemäß hergestellten Kupferkomplex-Disazoverbindungen als Farbsoffe beim Einsatz in Klotzflotten und Druckpasten und bei deren Verwendung zu hochkonzentrierten wäßrigen Färbepräparationen niederschlägt. So kann man bereits die Verbindung der allgemeinen Formel (3) in vorteilhafter Weise herstellen, indem man zunächst in an und für sich üblicher Weise 2-Naphthylamin-4,8-disulfonsäure diazotiert und im sauren Bereich mit Resorcin (1,3-Dihydroxybenzol) kuppelt und anschließend die saure Lösung mit einem basischen Lithiumsalz, wie Lithiumacetat, auf einen pH-Bereich zwischen etwa 3 und 6 einstellt, innerhalb dessen die zweite Kupplungsreaktion mit der Diazokomponente der Formel (4) durchgeführt wird. Ebenso kann die Abstumpfung der Säure aus der zweiten Diazotierungsund Kupplungsreaktion und die Einhaltung des pH-Bereiches durch ein säurebindendes Mittel bei der Kupferungsreaktion mit einer alkalischen Lithiumverbindung, wie insbesondere Lithiumacetat, durchgeführt werden.

Alkalisch als Anion eliminierbare Reste, die in β-Stellung der für das Formelglied Y stehenden Äthylgruppe gebunden sind, die sodann nach Elimination dieses Festes in die Vinylgruppe entsprechend dem Formelglied Y übergeht, sind beispielsweise die Säurereste von anorganischen und organischen Säuren, wie der Schwefelsäure, der Phosphorsäure, der Salzsäure oder von Alkancarbonsäuren, Alkansulfonsäuren, aromatischen Carbonsäuren und aromatischen Sulfonsäuren. Bevorzugt ist als eliminierbarer Rest das Chloratom, die Thiosulfato-, die Phosphato-, die Acetgloxy- und insbesondere die Sulfatogruppe zu nennen. Bevorzugt ist demgemäß die Herstellung von solchen 1 : 1-Kupferkomplex-Disazoverbindungen von Disazoverbindungen der allgemeinen Formel (1), in welchen Y für die β-Thiosulfatoäthyl-Gruppe (entsprechend der allgemeinen Formel $-CH_2-CH_2-S-OS_3M$ mit M der obengenannten Bedeutung), die β-Phosphatoäthyl-Gruppe (entsprechend der allgemeinen Formel $CH_2-CH_2-OPO_3M_2$ mit M der obengenannten Bedeutung), die β-Chloräthyl-Gruppe, die β-Acetyloxyäthyl-Gruppe und bevorzugt die Vinylgruppe und insbesondere bevorzugt die β-Sulfatoäthyl-Gruppe (entsprechend der allgemeinen Formel $-CH_2-CH_2-OSO_3M$ mit M der obengenannten Bedeutung) steht.

Die Ausbeute und Reinheit der erfindungsgemäß hergestellten 1: 1-Kupferkomplex-Disazoverbindungen ist sehr hoch.

Sie können aus der Reaktionslösung nach deren Filtration entweder direkt in gelöster Form, gegebenenfalls nach Aufkonzentrieren der Lösung, oder aber in Form von Pulvern nach Eindampfen oder Sprühtrocknen der Reaktionslösung als Farbstoffe der färberischen Anwendung zugeführt werden. Mit dieser Maßnahme fällt bei dem erfindungsgemäßen Herstellungsverfahren der 1 : 1-Kupferkomplex-Disazoverbindungen kein Abwasser an. Ebenfalls ist ein an sich mögliches Aussalzen der erfindungsgemäß hergestellten Kupferkomplex-Disazoverbindungen mittels Natriumchlorid oder Kaliumchlorid überflüssig, weil diese Kupferkomplexverbindungen in der Reaktionslösung und ebenso bei deren Eindampfen in genügend hoher Reinheit erhalten werden.

Die erfindungsgemäß erhältlichen Kupferkomplex-Disazofarbstoffe besitzen eine sehr gute Löslichkeit in Wasser. Sie haben faserreaktive Eigenschaften und stellen wertvolle Farbstoffe dar. Sie eignen sich zum Färben und/oder Bedrucken von Materialien, insbesondere von Fasermaterialien, aus natürlicher oder regenerierter Cellulose, wie Baumwolle, Leinen, Hanf, Jute und Viskosekunstseide, oder aus natürlichen, regenerierten oder synthetischen Polyamiden, wie Seide, Wolle, Polyamid-6, Polyamid-66 und Polyamid-11, desweiteren von Fasermaterialien aus synthetischen Polyurethanen und von Leder. Insbesondere eignen sie sich als faserreaktive Farbstoffe zum Färben oder Bedrucken von Cellulose oder cellulosehaltigen Fasermaterialien.

So erhält man mit den erfindungsgemäß erhältlichen Kupferkomplex-Disazoverbindungen auf Cellulosefasern beispielsweise nach dem Ausziehverfahren aus langer Flotte unter Verwendung von säurebindenden Mitteln und gegebenenfalls neutralen Salzen, wie Natriumchlorid oder Natriumsulfat, Färbungen mit hoher Farbstärke und Farbausbeute. Ebenso werden nach dem Klotzverfahren und nach den üblichen Druckverfahren auf Cellulosefasermaterialien farbstarke Färbungen und Drucke erhalten. Zur Applikation und Fixierung der erfindungsgemäß hergestellten Kupferkomplex-Disazoverbindungen lassen sich allgemein die in der Technik üblichen und bekannten Verfahren für faserreaktive Farbstoffe anwenden, wobei man zur Fixierung der Farbstoffe auf dem Fasermaterial in der Regel alkalisch wirkende Mittel, wie beispielsweise Alkalihydroxide, Alkalicarbonate, Alkalihydrogencarbonate, Alkaliphosphate oder Alkalisilikate, bei denen das Alkalimetall vorzugsweise Natrium oder Kalium ist, einsetzt.

Die mit den erfindungsgemäß hergestellten Kupferkomplex-Disazoverbindungen auf den genannten Materialien erhältlichen Färbungen und Drucke besitzen einen rotstichig braunen Farbton und zeichnen sich durch hohe Farbstärke aus. Sie zeigen sehr gute Lichtechtheiten und gute bis sehr gute Naßechtheiten, wie insbesondere gute bis sehr gute Wasser-, Wasch- und Schweißechtheiten.

Die nachstehenden Beispiele dienen zur Erläuterung der Erfindung. Die darin genannten Teile sind Gewichtsteile und die Prozentangaben stellen Gewichtsprozente dar, sofern nicht anders vermerkt. Gewichtsteile verhalten sich zu Volumenteilen wie Kilogramm zu Liter.

**Beispiel 1**

a) 303 Teile 2-Amminonaphthalin-4,8-disulfonsäure werden in einer Mischung aus 2000 Teilen Wasser, 500 Teilen Eis und 200 Teilen einer 30 %-igen wäßrigen Salzsäure bei 0 bis 10°C mit einer wäßrigen Lösung von 70 Teilen Natriumnitrit diazotiert. Überschüssiges Nitrit wird wie üblich anschließend durch Amidosulfonsäure zerstört. Man gibt nunmehr 110 Teile 1,3-Dihydroxybenzol (Resorcin) hinzu und rührt bis zur Beendiung der Kupplung weiter und stellt sodann den Ansatz mittels 33 %-iger wäßriger Natronlauge auf einen pH-Wert zwischen 6 und 7 ein.

b) 311 Teile 2-Amino-4-(β-sulfatoäthylsulfonyl)-anisol werden in 1000 Teilen Wasser, 500 Teilen Eis und 200 Teilen einer 33 %-igen wäßrigen Salzsäure bei einer Temperatur zwischen 0 und 5°C mit einer wäßrigen Lösung von 70 Teilen Natriumnitrit diazotiert. Überschüssiges Nitrit wird anschließend zerstört. Die Lösung dieses Diazoniumsalzes wird anschließend zu der unter a) dieses Beispieles hergestellten Monoazoverbindung unter Rühren zugegeben, wobei man durch langsame Zugabe von Natriumcarbonat einen pH-Wert zwischen 4 und 5,5 einstellt. Die Kupplung ist nach einer Stunde beendet. Die Reaktionslösung enthält die Disazoverbindung der Formel

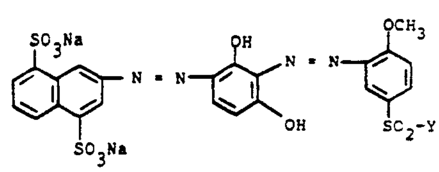

c) Zu der unter b) dieses Beispieles erhaltenen Lösung der Disazoverbindung gibt man 250 Teile Kupfersulfatpentahydrat. Mittels Natriumacetat hält man einen pH-Bereich von 4,0 bis 5,0. Man erhitzt den Reaktionsansatz auf 90°C und rührt bei einer Temperatur zwischen 90 und 95°C etwa 6 Stunden weiter, bis chromatographisch keine metallfreie Ausgangs-Disazoverbindung mehr erkennbar ist. Danach wird der Reaktionsansatz mittels Natriumcarbonat auf einen pH-Wert zwischen 5 und 5,5 eingestellt, mit Kieselgur versetzt und filtriert.

Die unter c) erhaltene Lösung der 1 : 1-Kupferkomplex-Disazoverbindung kann direkt zum Färben oder Bedrucken von Fasermaterialien, wie insbesondere Cellulosefasermaterialien, beispielsweise Baumwolle, nach den bekannten Färbemethoden

für faserreaktive Farbstoffe verwendet werden. Gegebenenfalls kann man zuvor die Farbstofflösung durch übliche Methoden (Eindampfen) aufkonzentrieren.

Zur Isolierung der erfindungsgemäs erhaltenen 1 : 1-Kupferkomplex-Disazoverbindung als feste Substanz kann die Farbstofflösung auch zur Trockene eingedampft oder sprühgetrocknet und erforderlichenfalls anschließend gemahlen werden. Man erhält etwa 1500 Teile eines braunen Pulvers, das das Natriumsalz der 1 : 1-Kupferkomplex-Disazoverbindung mit der β-Sulfatoäthylsulfonyl-Gruppe neben Elektrolytsalzen, wie Natriumchlorid und Natriumsulfat, zu etwa 57 % enthält. Dieser erfindungsgemäß erhaltene Farbstoff liefert beim Färben und Bedrucken nach den für faserreaktive Farbstoffe gebräuchlichen Methoden beispielsweise auf Baumwolle farbstarke rotstichig braune Färbungen und Drucke von vorzüglicher Lichtechtheit und guten bis sehr guten Naßechtheitseigenschaften, wie beispielsweise guten bis sehr guten Wasser-, Wasch- und Schweißechtheiten.

d) Das unter b) dieses Beispieles als Diazokomponente verwendete 2-Amino-4-(β-sulfatoäthylsulfonyl)-anisol kann beispielsweise wie folgt hergestellt werden: 231 Teile 2-Amino-4-(β-hydroxyäthylsulfonyl)-anisol werden in 164 Teile einer 60 %-igen wäßrigen Schwefelsäure eingetragen. Die Mischung wird 2 bis 3 Stunden bei 80° C gerührt, bis sie homogen ist, und dann auf einem emaillierten Blech etwa 20 Stunden auf 130 bis 140° C erhitzt, bevorzugt unter reduziertem Druck, bis die Veresterung vollständig ist (die Kontrolle kann in üblicher Weise durch Dünnschichtchromatographie oder durch Hochdruck-Flüssigchromatographie erfolgen). Man erhält etwa 315 Teile eines Rückstandes, das fast vollständig aus dem gewünschten 2-Amino-4-(β-sulfatoäthylsulfonyl)-anisol besteht.

**Beispiel 2**

Zu der gemäß Beispiel 1b) hergestellten Lösung der metallfreien Disazoverbindung gibt man 400 Teile Kupfersulfatpentahydrat hinzu und stellt den pH mittels Natriumacetat auf einen Wert zwischen 4 und 4,5 ein. Man erhitzt den Ansatz zum Sieden und führt die Reaktion unter Rückfluß weiter. Die Kupferungsreaktion ist nach etwa 3 Stunden beendet; metallfreie Ausgangs-Disazoverbindung ist nicht mehr nachweisbar. Man läßt den Reaktionsansatz abkühlen, fügt 78 Teile Oxalsäure-dihydrat hinzu und stellt den pH-Wert zwischen 5 und 6 mittels Natriumcarbonat, versetzt sodann mit 50 Teilen Kieselgur und rührt 2 Stunden nach. Der Ansatz wird sodann filtriert.

Das Filtrat enthält das Natriumsalz der 1 : 1-Kupferkomplex-Disazoverbindung von der metallfreien Disazoverbindung entsprechend der allgemeinen Formel (1), in welcher Y für die β-Sulfatoäthylsulfonyl-Gruppe steht.

**Beispiel 3**

Zu der gemäß Beispiel 1b) hergestellten Lösung der metallfreien Disazoverbindung gibt man 250 Teile Kupfersulfatpentahydrat und 320 Teile kristallisiertes Natriumacetat, erhitzt den Reaktionsansatz in einem verschließbaren Druckgefäß auf 120° C und führt die Reaktion bei dieser Temperatur unter Druck etwa 2,5 Stunden weiter. Die Kupferungsreaktion ist danach beendet.

Die Aufarbeitung des Reaktionsansatzes erfolgt gemäß den in Beispiel 1c) beschriebenen Angaben.

Der gemäß diesem Beispiel - wie auch nach dem Beispiel 2-erfindungsgemäß erhaltene Kupferkomplex-Disazofarbstoff besitzt dieselben guten Eigenschaften wie der nach Beispiel 1c) erhältliche Farbstoff.

**Beispiel 4**

Man verfährt gemäß der Verfahrensweise des Beispieles 2, führt jedoch die Kupferungsreaktion nicht unter Rückfluß durch, sondern bei einer Temperatur zwischen 80 und 85° C unter Rühren. Die Kupferungsreaktion ist nach etwa 13 Stunden beendet. Man erhält einen Farbstoff gleich guter Qualität wie in den vorherigen Beispielen beschrieben.

**Beispiel 5**

Man verfährt gemäß der Verfahrensweise des Beispieles 2, hält jedoch bei der Kupferungsreaktion einen pH-Wert zwischen 3,5 und 4,0 ein. Die Kupferungsreaktion ist nach etwa 3 Stunden beendet. Man erhält einen Kupferkomplex-Disazofarbstoff mit gleich guten färberischen Eigenschaften wie der in den vorherigen Beispielen erhaltene Farbstoff.

**Beispiel 6**

Man verfährt gemäß der Verfahrensweise des Beispieles 2, führt jedoch die Kupferungsreaktion bei einem pH-Wert zwischen 5,0 und 5,5 durch. Die Kupferungsreaktion ist nach etwa 8 Stunden beendet. Man erhält einen Kupferkomplex-Disazofarbstoff mit gleich guten färberischen Eigenschaften wie in den vorherigen Beispielen.

**Beispiel 7**

a) 30,3 Teile 2-Aminonaphthalin-4,8-disulfonsäure werden in etwa 700 Teile Wasser von 0 bis 5° C eingerührt und 50 Teile einer 31 %-igen wäßrigen Salzsäure werden hinzugegeben. Sodann diazotiert man unterhalb von 5° C durch Zugabe von 18 Teilen einer 40 %-igen wäßrigen Natriumnitritlösung, rührt eine Stunde weiter und zerstört dann überschüssige salpetrige Säure in üblicher Weise. Zu dieser Diazoniumsalzlösung gibt man sodann 11,3 Teile Resorcin und führt die Kupplungsreaktion unter weiterem Rühren zu Ende, bis noch höchstens 2 % der Kupplungskomponente nachweisbar sind. Sodann wird der pH mittels etwa 50 Teilen Lithiumacetat auf einen Wert zwischen 3,0 und 4,0 gestellt.

b) In einem getrennten Ansatz werden 32,66 Teile 2-Amino-4-(β-sulfatoäthylsulfonyl)-anisol in etwa 200 Teile Wasser von 0° C eingerührt und mit 20 Teilen 31 %-iger wäßriger Salzsäure versetzt. Die Diazotierung erfolgt mit 18 Teilen einer 40 %-igen wäßrigen Natriumnitritlösung; die Diazotierung wird noch eine Stunde unterhalb 5° C weitergeführt, und überschüssige salpetrige Säure wird sodann zerstört.

c) Zu der unter b) hergestellten Diazoniumsalzlösung gibt man die unter a) hergestellte Lösung der Monoazoverbindung, wobei man mittels Natriumcarbonat einen pH-Wert zwischen 4 und 4,5 einstellt und während der Kupplungs reaktion hält. Nach beendeter Kupplung gibt man 25 Teile Kupfersulfatpentahydrat hinzu, erhitzt auf 90° C und hält den pH-Wert zwischen 4 und 4,5 mittels etwa 50 Teilen Lithiumacetat. Die Kupferungsreaktion wird noch 8 bis 10 Stunden bei dem pH-Bereich von 4 bis 4,5 und bei einer Temperatur zwischen 85 und 90° C weiter- und zu Ende geführt und sodann die erhaltene Lösung der 1 : 1-Kupferkomplex-Disazoverbindung einer Klärfiltration unterworfen und anschließend eingedampft oder sprühgetrocknet.

Es werden 200 Teile des Farbstoffpulvers des Alkalimetallsalzes, insbesondere Lithiumsalzes, der 1: 1-Kupferkomplex-Disazoverbindung der metallfreien Verbindung der Formel (1) erhalten, das nur einen geringen Anteil an Elektrolytsalzen und anderen Inertsalzen (Natrium- und Lithiumchlorid und -acetat) enthält, eine sehr gute Wasserlöslichkeit aufweist und gleich gute färberische Eigenschaften besitzt wie ein nach einem der obigen Beispiele hergestelltes Farbstoffprodukt.

**Beispiel 8**

Man verfährt gemäß der Verfahrensweise des Beispieles 1, setzt jedoch im Verfahrensschritt b) anstelle von 2-Amino-4-(β-sulfatoäthglsulfonyl)-anisol als Diazokomponente 2-Amino-4-(β-thiosulfatoäthylsulfonyl)-anisol in äquimolarer Menge ein. Es wird die 1 : 1-Kupferkomplex-Disazoverbindung (in Form des Natriumsalzes) der metallfreien Verbindung der Formel

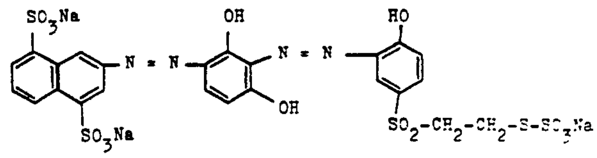

erhalten. Diese Kupferkomplex-Disazoverbindung besitzt ebenfalls gute färberische Eigenschaften und liefert auf Baumwolle nach den für faserreaktive Farbstoffe üblichen Färbe- und Druckverfahren farbstarke, rotstichig braune Färbungen und Drucke von vorzüglicher Lichtechtheit und guten bis sehr guten Naßechtheitseigenschaften, wie sie beispielsweise für die entsprechende Sulfatoverbindung des Beispieles 1 genannt sind.

**Beispiel 9**

Man verfährt gemäß der Verfahrensweise des Beispieles 1, setzt jedoch im Verfahrensschritt b) anstelle von 2-Amino-4-(β-sulfatoäthylsulfonyl)-anisol als Diazokomponente 2-Amino-4-(β-phosphatoäthylsulfonyl)-anisol in äquimolarer Menge ein. Es wird die 1 : 1-Kupferkomplex-Disazoverbindung (in Form des Natriumsalzes) der metallfreien Verbindung der Formel

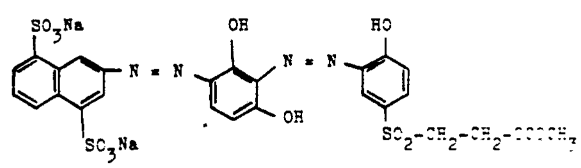

erhalten. Diese Kupferkomplex-Disazoverbindung besitzt ebenfalls gute färberische Eigenschaften und liefert auf Baumwolle nach den für faserreaktive Farbstoffe üblichen Färbe- und Druckverfahren farbstarke, rotstichig braune Färbungen und Drucke von vorzüglicher Lichtechtheit und guten bis sehr guten Naßechtheitseigenschaften, wie sie

beispielsweise für die entsprechende Sulfatoverbindung des Beispieles 1 genannt sind.

**Beispiel 10**

Man verfährt gemäß der Verfahrensweise des Beispieles 1, setzt jedoch im Verfahrensschritt b) anstelle von 2-Amino-4-(β-sulfatoäthylsulfonyl)-anisol als Diazokomponente 2-Amino-4-vinylsulfonyl-anisol in äquimolarer Menge ein. Es wird die 1 : 1-Kupferkomplex-Disazoverbindung (in Form des Natriumsalzes) der metallfreien Verbindung der Formel

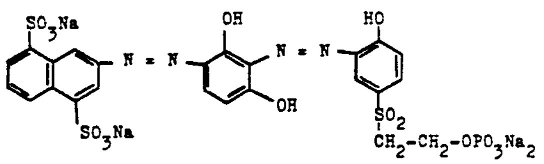

erhalten. Diese Kupferkomplex-Disazoverobindung besitzt ebenfalls gute färberische Eigenschaften und liefert auf Baumwolle nach den für faserreaktive Farbstoffe üblichen Färbe- und Druckverfahren farbstarke, rotstichig braune Färbungen und Drucke von vorzüglicher Lichtechtheit und guten bis sehr guten Naßechtheitseigenschaften, wie sie beispielsweise für die entsprechende Sulfatoverbindung des Beispieles 1 genannt sind.

**Beispiel 11**

Man verfährt gemäß der Verfahrensweise des Beispieles 1, setzt jedoch im Verfahrensschritt b) anstelle von 2-Amino-4-(β-sulfatoäthylsulfonyl)-anisol als Diazokomponente 2-Amino-4-(β-acetyloxyäthylsulfonyl)-anisol in äquimolarer Menge ein. Es wird die 1 : 1-Kupferkomplex-Disazoverbindung (in Form des Natriumsalzes) der metallfreien Verbindung der Formel

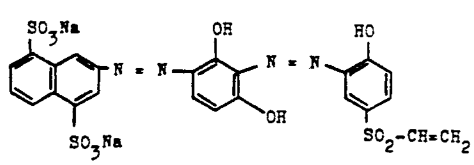

erhalten. Diese Kupferkomplex-Disazoverbindung besitzt ebenfalls gute färberische Eigenschaften und liefert auf Baumwolle nach den für faserreaktive Farbstoffe üblichen Färbe- und Druckverfahren farbstarke, rotstichig braune Färbungen und Drucke von vorzüglicher Lichtechtheit und guten bis sehr guten Naßechtheitseigenschaften, wie sie beispielsweise für die entsprechende Sulfatoverbindung des Beispieles 1 genannt sind.

**Beispiel 12**

Man verfährt gemäß der Verfahrensweise des Beispieles 1, setzt jedoch im Verfahrensschritt b) anstelle von 2-Amino-4-(β-sulfatoäthylsulfonyl)-anisol als Diazokomponente 2-Amino-4-(β-chloräthylsulfonyl)-anisol in äquimolarer Menge ein. Es wird die 1 : 1-Kupferkomplex-Disazoverbindung (in Form des Natriumsalzes) der metallfreien Verbindung der Formel

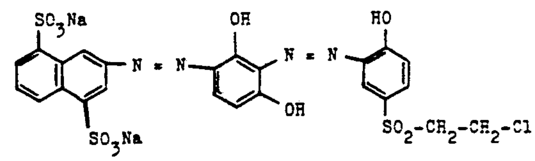

erhalten. Diese Kupferkomplex-Disazoverbindung besitzt ebenfalls gute färberische Eigenschaften und liefert auf Baumwolle nach den für faserreaktive Farbstoffe üblichen Färbe- und Druckverfahren farbstarke, rotstichig braune Färbungen und Drucke von vorzüglicher Lichtechtheit und guten bis sehr guten Naßechtseigenschaften, wie sie beispielsweise für die entsprechende Sulfatoverbindung des Beispieles 1 genannt sind.

**Patentansprüche**

1. Verfahren zur Herstellung einer 1 : 1-Kupferkomplex-Disazoverbindung einer metallfreien Disazoverbindung, die der allgemeinen Formel (1)

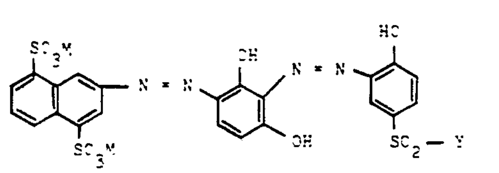

entspricht, in welcher M ein Wasserstoffatom oder das Äquivalent eines ein- oder zweiwertigen

Metalls ist und Y die Vinylgruppe bedeutet oder für eine Äthylgruppe steht, die in β-Stellung einen als Anion alkalisch eliminierbaren Rest enthält, dadurch gekennzeichnet, daß man eine Monoazoverbindung der allgemeinen Formel (3)

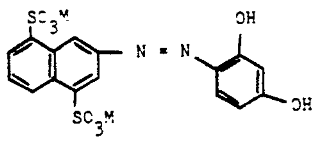

(3)

in welcher M die obengenannte Bedeutung besitzt, mit der Diazoniumverbindung einer Aminoverbindung der allgemeinen Formel (4)

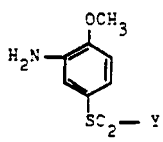

(4)

in welcher Y die obengenannte Bedeutung besitzt, kuppelt und die erhaltene Disazoverbindung der allgemeinen Formel (2)

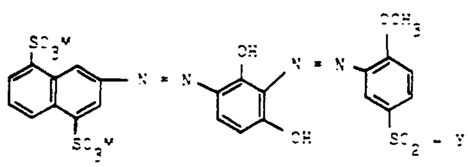

(2)

in welcher M und Y die oben angegebenen Bedeutungen haben, bei einer Temperatur zwischen 70 und 130° C und einem pH-Wert zwischen 3 und 6 mit einem kupferabgebenden Mittel behandelt.

2. Verfahren nach Anspruch 1, dadurch gekennzeichnet, daß man die Kupferungsreaktion bei einer Temperatur zwischen 80 und 100° C durchführt.

3. Verfahren nach Anspruch 1 oder 2, dadurch gekennzeichnet, daß man die Kupferungsreaktion bei einem pH-Wert zwischen 3,5 und 5,0 durchführt.

4. Verfahren nach mindestens einem der Ansprüche 1 bis 3, dadurch gekennzeichnet, daß man die Disazoverbindung der allgemeinen Formel (2) mit der äquimolaren Menge einer kupferabgebenden Verbindung umsetzt.

5. Verfahren nach mindestens einem der Ansprüche 1 bis 4, dadurch gekennzeichnet, daß man nach der Umsetzung der diazotienten Aminoverbindung der Formel (4) mit der Azoverbindung der Formel (3) die Kupferungsreaktion der erhaltenen Disazoverbindung der Formel (2) ohne deren Zwischenisolierung durchführt.

6. Verfahren nach mindestens einem der Ansprüche 1 bis 5, dadurch gekennzeichnet, daß Y die β-Sulfatoäthyl-Gruppe ist.

## Claims

1. A process for the preparation of a 1 : 1 copper complex disazo compound of a metal-free disazo compound of the formula (1)

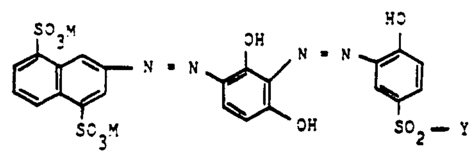

(1)

in which M is a hydrogen atom or the equivalent of a monovalent or divalent metal and Y denotes the vinyl group or represents an ethyl group containing, in the β-position, a radical which can be eliminated in the form of an anion by means of alkalis, which comprises coupling a monoazo compound of the formula (3)

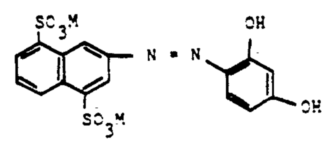

(3)

in which M has the abovementioned meaning, with the diazonium compound of an amino compound of the formula (4)

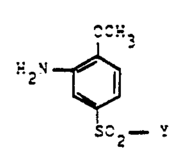

in which Y has the abovementioned meaning, and treating the resulting disazo compound of the formula (2)

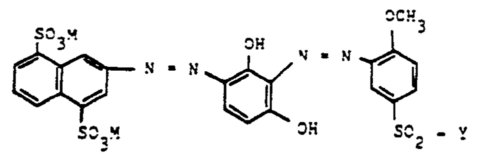

(2)

in which M and Y have the abovementioned meanings, with a copper donor at a temperature between 70 and 130° C and a pH between 3 and 6.

2. The process as claimed in claim 1, wherein the coppering reaction is carried out at a temperature between 80 and 100° C.

3. The process as claimed in claim 1 or 2, wherein the coppering reaction is carried out at a pH between 3.5 and 5.0.

4. The process as claimed in at least one of claims 1 to 3, wherein the disazo compound of the formula (2) is reacted with an equimolar amount of a copper donor.

5. The process as claimed in at least one of claims 1 to 4, wherein, after the diazotized amino compound of the formula (4) has been reacted with the azo compound of the formula (3), the coppering reaction of the resulting disazo compound of the formula (2) is carried out without isolating the latter.

6. The process as claimed in at least one of claims 1 to 5, wherein Y is the β-sulfatoethyl group.

**Revendications**

1. Procédé pour préparer un composé disazoïque complexe cuivré 1 : 1 dérivant d'un composé disazoïque non métallisé répondant à la formule générale (1):

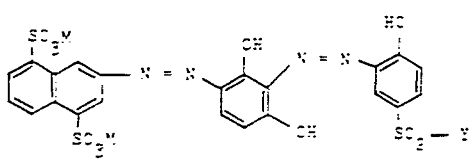

dans laquelle M représente un atome d'hydrogène ou l'équivalent d'un métal univalent ou bivalent, et Y représente un radical vinyle ou un radical éthyle portant en position β un radical éliminable à l'état d'anion en milieu alcalin, procédé caractérisé en ce qu'on copule un composé monoazoïque répondant à la formule générale (3):

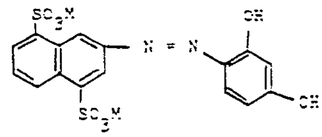

dans laquelle M a la signification qui lui a été donnée ci-dessus, avec le diazoïque d'un composé aminé répondant à la formule générale (4):

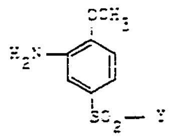

dans laquelle Y a la signification qui lui a été donnée ci-dessus, et on traite le composé disazoïque obtenu, qui répond à la formule générale (2):

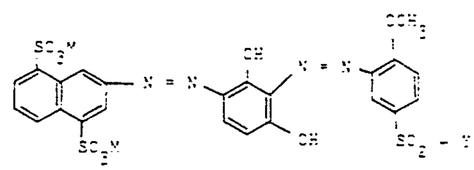

dans laquelle M et Y ont les significations qui leur ont été données ci-dessus, à une température comprise entre 70 et 130° C et à un pH compris entre 3 et 6, par un agent cédant du cuivre.

2. Procédé selon la revendication 1 caractérisé en ce qu'on effectue la réaction de cuivrage à une température comprise entre 80 et 100° C.

3. Procédé selon l'une des revendications 1 et 2, caractérisé en ce qu'on effectue la réaction de cuivrage à un pH compris entre 3,5 et 5,0.

4. Procédé selon l'une quelconque des revendications 1 à 3, caractérisé en ce qu'on fait réagir le composé disazoïque de formule générale (2) avec la quantité équimolaire d'un composé cédant du cuivre.

5. Procédé selon l'une quelconque des revendications 1 à 4, caractérisé en c que, après avoir fait réagir le diazoïque de l'amine de formule (4) avec le composé azoïque de formule (3), on effectue la réaction de cuivage du composé disazoïque de formule (2) obtenu sans

isoler celui-ci intermédiairement.

6. Procédé selon l'une quelconque des revendications 1 à 5, caractérisé en ce que Y représente un radical sulfato-2 éthyle.